Europäisches Patentamt

European Patent Office

Office européen des brevets

(11) Numéro de publication: **0 003 944**
**B1**

# (12) FASCICULE DE BREVET EUROPEEN

(21) Numéro de dépôt: **79430004.6**

(22) Date de dépôt: **13.02.79**

(51) Int. Cl.³: **A 01 G 9/24, G 02 B 5/24**

(54) Procédé et dispositif pour climatiser des serres.

(30) Priorité: **17.02.78 FR 7804999**

(43) Date de publication de la demande:
**05.09.79 Bulletin 79/18**

(45) Mention de la délivrance du brevet:
**11.02.81 Bulletin 81/6**

(84) Etats Contractants Désignés:
**BE DE GB IT NL**

(56) Documents cités:
**FR - A - 2 344 217**
**US - A - 3 107 052**

(73) Titulaire: **ANVAR Agence Nationale de Valorisation de la Recherche 13, rue Madeleine Michelis F-92522 Neuilly-sur-Seine (FR)**

(72) Inventeur: **Comte, Paul 42, Boulevard d'Aguillon F-06600 Antibes (FR)**
(72) Inventeur: **Repetti, René Villa La Sousto Quartier de Nartassier F-06250 Mougins (FR)**

(74) Mandataire: **Azais, Henri et al, c/o CABINET BEAU DE LOMENIE 14, rue Raphael F-13008 Marseille (FR)**

Courier Press, Leamington Spa, England.

## Procédé et dispositif pour climatiser des serres

La présente invention a pour objet un procédé et un dispositif pour climatiser des serres. Le secteur technique de l'invention est celui de la construction et de l'utilisation des serres et autres abris analogues. On connaît déjà des serres de culture comportant une couverture transparente et des capteurs d'énergie solaire incorporés ou associés à ladite ce verture, qui sont des capteurs ayant un pouvoir absorbant sélectif, de telle sorte qu'ils absorbent les rayonnements infrarouges et qu'ils laissent passer les rayonnements ultraviolets et visibles, nécessaires au développement des plantes. De telles serres présentent l'avantage de réduire la température à l'intérieur de la serre pendant les heures d'ensoleillement et de récupérer des calories qui sont utilisées pour chauffer la serre pendant les heures plus froides de la nuit.

Dans les installations existantes, un liquide caloporteur circule entre un réservoir d'accumulation de calories et des surfaces d'échange thermique qui servent à la fois de capteurs pendant la journée et de radiateurs pendant la nuit. Cette diposition présente des inconvénients. D'une part, les pertes d'énergie au niveau des radiateurs situés à proximité de la couverture sont importantes pendant la nuit et les calories dégagées au niveau de la couverture de la serre ne sont pas utilisées par les plantes avec un très bon rendement. D'autre part, dans les installations connues, le pouvoir absorbant sélectif est dû, soit aux parois du capteur qui sont des parois filtrantes qui absorbent sélectivement certaines bandes du spectre lumineux, soit à un liquide caloporteur coloré, par exemple une solution de chlorure cuivrique, qui absorbe sélectivement, certaines radiations. Dans ces deux cas, il est pratiquement impossible de moduler le pouvoir absorbant des capteurs en fonction de l'intensité du rayonnement lumineux et de la température à l'interieur de la serre. On peut faire varier le débit de liquide caloporteur à travers les capteurs pour maintenir sensiblement constante la temperature du liquide à la sortie des capteurs, mais on ne peut pas faire varier la transparence des capteurs pour contrôler la luminosité à l'intérieur de la serre.

Les serres comportent, de façon connue, une couverture transparente et absorbante sélective qui constitue un ombrage et qui protège les plantes tout en recupérant des calories.

Un objectif de la présente invention est de procurer des moyens permettant de faire varier, automatiquement ou non, l'opacité de cet ombrage afin de créer et de maintenir à l'intérieur de la serre un climat artificiel c'est-à-dire une température et une luminosité contrôlées qui sont adaptées à la nature des plantes et au stade de développement de celles-ci malgré les variations de luminosité et de temperature externe. Le procédé selon l'invention a pour objet la climatisation des serres revêtues de façon connue d'une couverture transparente comportant des capteurs transparents dans lesquels on fait circuler un fluide qui absorbe une partie de l'énergie solaire. L'objectif de l'invention est atteint par le fait que le fluide qui circule dans les capteurs est un mélange d'eau et d'un produit qui transmet à l'intérieur de la serre une fraction de l'énergie solaire sensiblement constante sur toute la largeur du spectre visible et on fait varier la concentration dudit produit et donc l'opacité de la couverture en fonction des variations de la luminosité solaire, de sorte que l'on contrôle la luminosité la température à l'intérieur de la serre. De préférence pendant les périodes d'ensoleillement, on fait circuler en circuit fermé dans un réservoir de sédimentation et dans des capteurs en un matériau transparent, disposés sous la couverture transparente d'une serre, une suspension dans de l'eau d'un produit plus lourd que l'eau qui laisse passer une fraction de l'énergie solaire sensiblement constante sur toute la largeur du spectre visible et on fait varier la quantité dudit produit qui sédimente dans le fond du réservoir en fonction des variations de luminosité, de telle sorte que l'on module la proportion du produit en suspension et la fraction de l'énergie solaire qui est transmise à l'intérieur de la serre sur toute la largeur du spectre visible.

Suivant un premier mode de réalisation du procédé selon l'invention, le produit en suspension dans l'eau est un mélange composé d'un ou plusieurs liquides organiques pris dans le groupe constitué par les alkyl-phtalates et l'huile de ricin et d'un ou plusieurs liquides tension-actifs, de préférence, des sulfonates aromatiques ou les sels alcalins ou d'ammonium de ceux-ci. Suivant un autre mode réalisation, le produit en suspension dans l'eau est un produit solide, finement divisé, pris dans le groupe constitué par l'oxyde de zinc, l'oxyde de titane et le nitrate basique de bismuth.

Le dispositif selon l'invention comporte, de façon connue, des capteurs solaires plans en un matériau transparent qui sont incorporés dans un circuit fermé dans lequel circule un liquide caloporteur qui absorbe sélectivement l'énergie solaire. Dans le dispositif, le liquide caloporteur est une suspension dans l'eau d'un produit plus lourd que l'eau qui laisse passer une fraction de l'énergie solaire sensiblement constante sur toute la largeur du spectre visible et le circuit fermé comporte des moyens pour faire varier la concentration de ladite suspension en fonction des variations de la luminosité externe, de telle sorte que lesdits capteurs constituent un ombrage artificiel ayant une opacité contrôlée.

Dans un mode de réalisation, préférentiel, le circuit fermé comporte un réservoir de sédimentation équipé de plusieurs sorties liquides disposées à la partie inférieure dudit réservoir et des moyens pour fermer et pour ouvrir automatiquement lesdites sorties en fonction de l'intensité du flux lumineux et/ou de la température à l'intérieur de la serre, de telle sorte que la concentration et le pouvoir absorbant de la suspension qui circule dans les capteurs varient.

L'invention a pour résultat de nouvelles serres destinés à la culture de plantes et végétaux de toutes espèces. Ces serres permettent de créer et de maintenir automatiquement à l'intérieur d'une enceinte un climat artificiel en maitrisant à la fois la température, la luminosité et l'énergie reçue, malgré les variations climatiques externes. Elles permettent de récupérer une partie de l'énergie solaire et de moduler cette récupération en faisant varier le pouvoir absorbant de la couverture. L'énergie récupérée est stockée et utilisée pendant la nuit pour chauffer la serre d'où une économie d'énergie et des frais de chauffage. On sait que les plantes n'utilisent pour la photosynthèse qu'une partie du spectre située dans l'ultraviolet et dans le spectre visible.

Le fluide filtrant utilisé dans le procédé et le dispositif de climatisation des serres selon l'invention est de préférence, une suspension dans l'eau d'un produit liquide ou pulvérulent, qui absorbe une fraction de l'énergie solaire sensiblement constante sur toute la largeur du spectre visible et qui est transparent aux rayons ultraviolets. On sait que l'eau absorbe les rayons infrarouges. Le liquide caloporteur utilisé constitue donc un filtre sélectif qui absorbe les infrarouges et une fraction du spectre visible qui est la même pout toutes les radiations visibles et qui laisse donc passer également une fraction du spectre visible. Le coefficient d'absorption du spectre visible dépend de la proportion de produit en suspension dans l'eau. De plus, sous les climats très ensoleillés, le produit en suspension est avantageusement un produit de couleur blanche ayant des propriétés réfléchissantes dans le spectre visible, de sorte qu'en faisant varier la concentration de la suspension, on fait varier le pouvoir réfléchissant du liquide caloporteur, ce qui permet de'éviter l'échauffement de la serre pendant le jour. Un tel produit réfléchissant absorbe une partie de l'énergie par suite des réflexions multiples sur les particules. On a pu mesurer que lorsque la proportion de produit en suspension est de l'ordre de 3% du poids total, 99% de l'énergie du spectre visible était absorbée avec une épaisseur de lame de 5 mm. En faisant varier la proportion de produit en suspension dans l'eau entre 0,1% et 3%, on module le coefficient d'absorption et de réflexion du spectre visible et on crée un ombrage artificiel ayant une opacité variable et contrôlable, ce qui permet d'agir sur la photosynthèse, le phototropisme et la photomorphogénèse.

Les capteurs utilisés dans le procédé selon l'invention constituent des insolateurs transparents sélectifs à fonctions multiples. Ils remplissent une fonction de filtres sélectifs qui arrêtent les radiations infrarouges et une fraction variable du spectre visible en les absorbant et éventuellement en les réfléchissant et qui constituent des ombrages adaptables. Ils remplissent également une fonction d'écrans thermiques qui permettent d'agir sur la température à l'intérieur de la serre. La disposition des capteurs sous la couverture, dont ils sont séparés par une lame d'air, permet d'obtenir une bonne isolation thermique qui réduit les échanges thermiques avec l'extérieur, notamment pendant la nuit. Le coefficient de déperdition calorifique de la couverture est réduit de 50%. L'effet de serre est conservé grâce à la disposition des capteurs sous la couverture transparente.

A la différence de certaines serres connues, les capteurs utilisés dans le procédé selon l'invention ne sont pas utilisés comme radiateurs pendant la nuit. L'énergie captée dans le jour est accumulée dans des réservoirs d'accumulation, de préférence dans plusieurs réservoirs montés en cascade afin d'améliorer le rendement grâce à la stratification dans ces réservoirs. L'eau qui a été chauffée pendant le jour est utilisée la nuit dans des dispositifs de chauffage par le sol ou par des tubes aériens ou par des aérothermes ou par tout autre moyen de chauffage de l'enceinte permettant d'utiliser de l'eau à température relativement basse, de l'ordre de 30°C.

Un avantage intéressant du dispositif selon l'invention réside dans le fait qu'il est facilement adaptable aux serres existantes du fait que les capteurs sont posés sous la couverture transparente. Un autre avantage du dispositif selon l'invention comportant des réservoirs de stockage avec stratification réside dans le fait que les capteurs sont alimentés pendant la journée en eau froide, ce qui réduit la température des panneaux et leur émissivité. Un autre avantage des capteurs selon l'invention à opacité variable est qu'ils remplacent tous les procédés actuels de chaulage et de peinture saisonnière des couvertures de serres ou de recouvrement de celles-ci au moyen de claies ou de toiles destinées à créer des ombrages pour protéger les plantes du soleil pendant la journée. Un autre avantage du procédé et du dispositif selon l'invention réside dans le fait que les produits P en suspension ou en émulsion dans l'eau diffusent la lumière, ce qui permet d'obtenir en tout point de l'intérieur de la serre une lumière bien répartie.

La description suivante se réfère aux dessins annexés qui représentent un exemple de réalisation d'une serre climatisée selon l'invention.

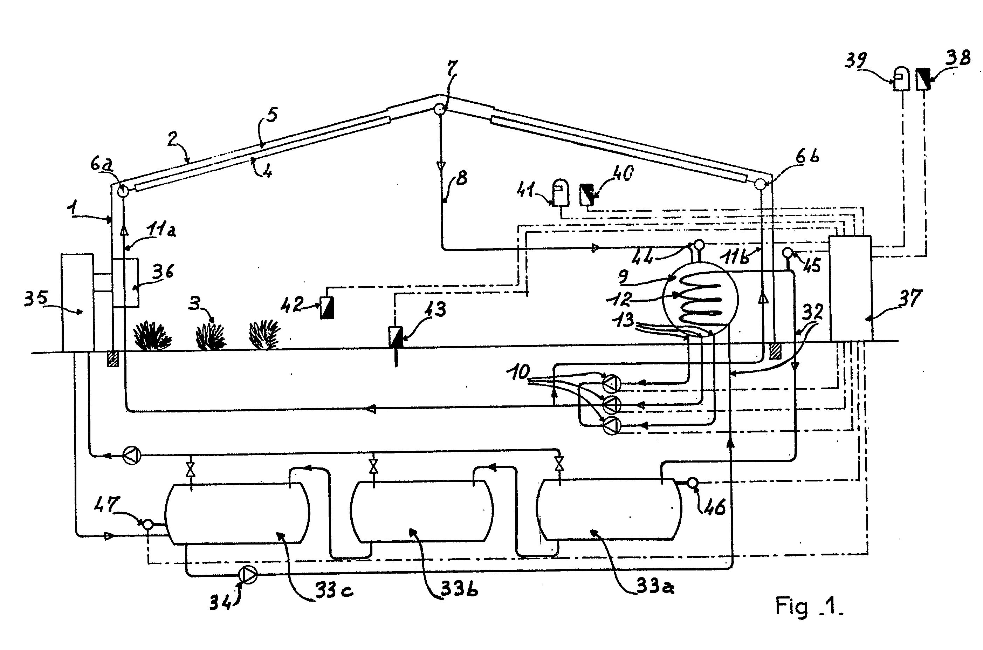

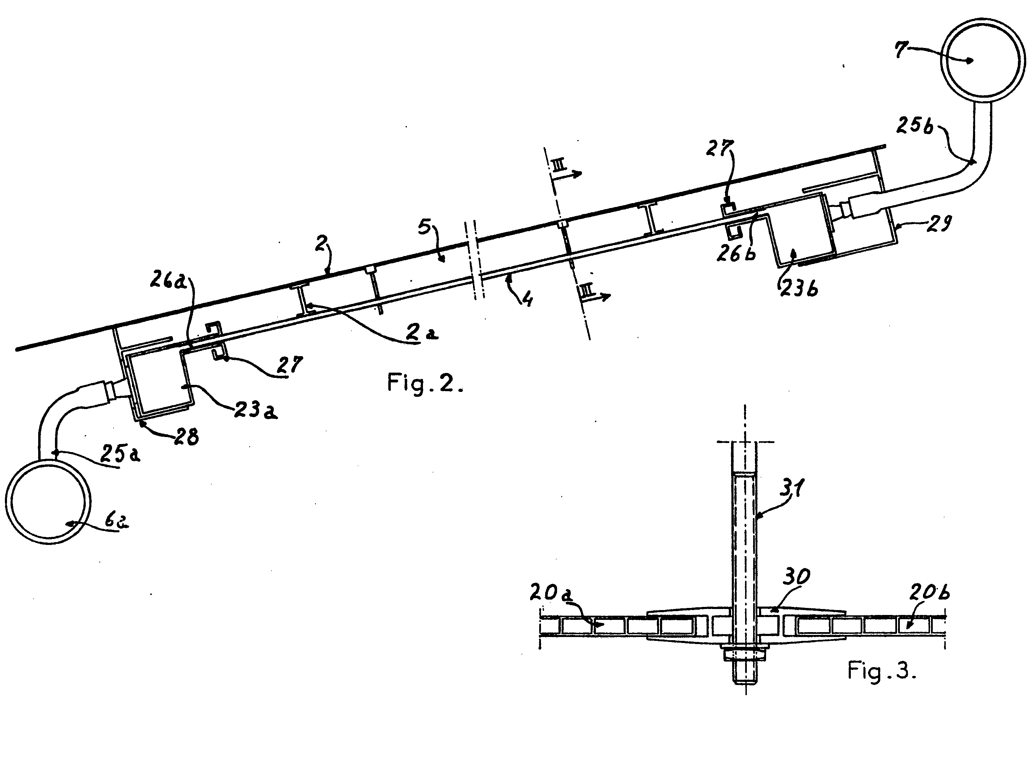

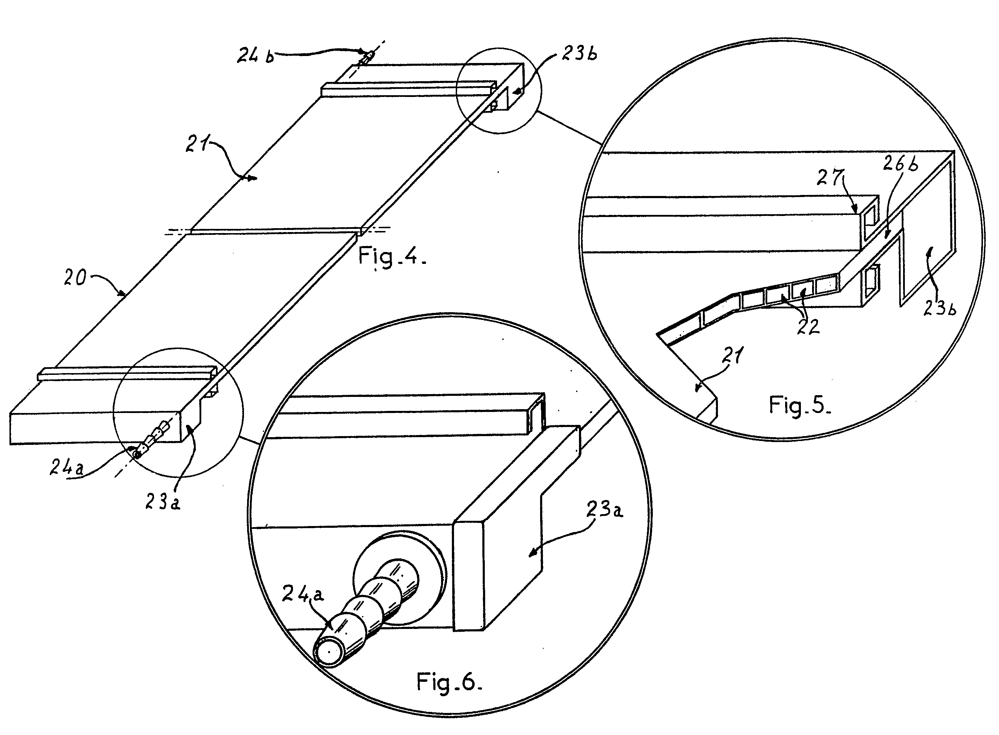

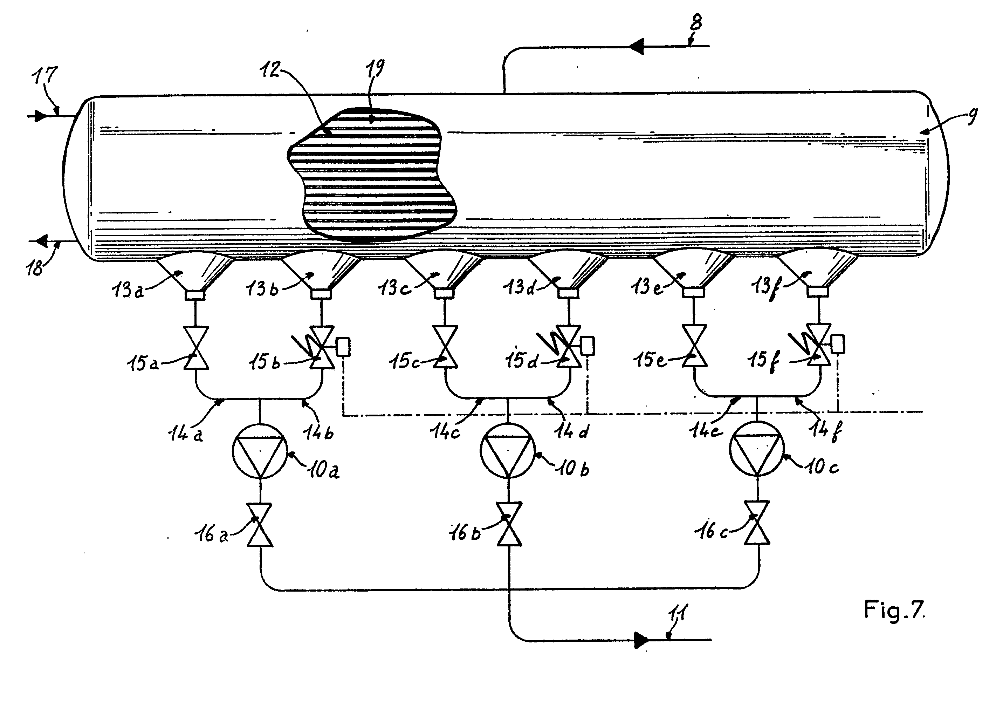

La figure 1 est une vue d'ensemble schématique d'un dispositif de climatisation selon l'invention; la figure 2 est une coupe transversale d'une partie de la couverture; la figure 3 est une coupe partielle transversale selon III—III de la figure 2 à la jonction de deux capteurs; la figure 4 est une vue en perspective d'un mode de réalisation d'un capteur élémentaire; les figures 5 et 6 sont des vues à plus grande echelle de parties de la figure 4; la figure 7 est une vue du réservoir de sédimentation et des sorties de liquide de celui-ci.

La figure 1 représente une serre 1 ou tout autre abri de culture analogue, de tout type connu, ayant une couverture transparente 2, dans laquelle on cultive des plantes 3, qui peuvent être, par exemple, des légumes, des fleurs, des plantes ornementales, des plantes à fruits ou à graines, des champignons etc ... Sous la couverture 2, sont disposés des panneaux 4 comportant deux parois transparentes entre lesquelles circule un liquide caloporteur. Les panneaux 4 sont séparés de la couverture par un espace intermédiaire 5. Les repères 6a et 6b désignent les collecteurs aller de fluide caloporteur. Le repère 7 désigne le ou les collecteurs retour de fluide caloporteur. Le fluide caloporteur circule dans un circuit fermé qui comporte une conduite de retour 8, un réservoir de sédimentation 9, des pompes de circulation 10, au nombre de trois par exemple, et des conduites 11a et 11b qui aboutissent sur les collecteurs aller 6a et 6b. Dans l'exemple représenté, le réservoir 9 fait en même temps fonction d'échangeur représenté schématiquement par le serpentin 12. Le réservoir de sédimentation 9 est, par exemple, un cylindre horizontal de forme allongée qui est équipé de plusieurs sorties de liquide 13 réparties le long du fond du réservoir. La figure 7 représente à plus grande échelle le réservoir décanteur 9 équipé de six sorties 13a, 13b, 13c, 13d, 13e et 13f, en forme de mamelles convergentes réparties le long de la génératrice inférieure du réservoir. Chaque mamelle est connectée sur une conduite respectivement 14a à 14f comportant une vanne, respectivement 15a à 15f. Les conduites 14 sont connectées deux par deux sur une pompe de circulation 10a, 10b, 10c.

Les sorties des trois pompes sont connectées en parallèle par l'intermédiaire d'une vanne à commande manuelle 16a, 16b, 16c, sur la conduite aller 11. La conduite 8 de retour du fluide caloporteur arrive à la partie supérieure du réservoir 9. Un arrachement partiel montre le faisceau 12 de tubes échangeurs dans lesquels circule un liquide caloporteur qui entre par un tube d'arrivée 17 et qui ressort par un tube 18. Le liquide caloporteur 19 qui circule dans les panneaux 4, circule à faible vitesse à travers les tubes du faisceau 12.

Dans l'exemple représenté sur la figure 7, les vannes 15a, 15c et 15e sont manuelles et les vannes 15b, 15d et 15f sont des vannes motorisées, par exemple des électrovannes, qui sont commandées automatiquement. En variante, toutes les vannes 15 peuvent être des électrovannes ou au contraire, dans une installation non automatique, toutes les vannes 15 pourraient être des vannes à commande manuelle. Le fluide caloporteur 19 est une suspension ou une émulsion dans de l'eau d'un produit P plus lourd que l'eau, de sorte qu'il se produit une sédimentation dans le fond du réservoir 9 où se dépose le produit P. Le produit P est choisi de telle sorte qu'il ait des propriétés d'absorption sélective de la lumière solaire. Il est transparent aux rayons ultraviolets (U.V.) proches du spectre visible. Il absorbe les rayons infrarouges (I.R.) proches du spectre visible et les I.R. lointains. Il absorbe partiellement le spectre visible de façon uniforme sur toute la largeur du spectre et il transmet donc une fraction de l'énergie lumineuse qui est sensiblement la même pour toutes les radiations visibles. Le coefficient d'absorption du spectre visible de la suspension, qui est sensiblement le même pour toutes les radiations visibles, varie linéairement en fonction de la concentration en produit P de la suspension.

Comme l'eau absorbe les rayons infrarouges, en faisant varier la concentration de la suspension en produit P, on obtient donc un liquide caloporteur 19 qui n'absorbe pas les U.V., qui absorbe totalement les I.R. et dont le coefficient d'absorption et de transmission du spectre visible varie proportionnellement à la concentration en produit P de la suspension. Le produit P doit présenter, en outre, certaines propriétés. De préférence, il doit être photochimiquement stable, non corrosif, non toxique, non polluant, biodégradable, bactéricide, algicide, se disperser dans l'eau et avoir un coefficient d'émissivité faible. Il doit être stable à l'oxydation et non abrasif.

Sous les climats très ensoleillés, la quantité de calories absorbées dans la journée peut devenir supérieure aux besoins du chauffage pendant la nuit et la température de la suspension qui circule dans les capteurs devient trop importante. Dans ce cas, on utilise un produit P de couleur blanche qui a des propriétés réfléchissantes dans le spectre visible, de sorte qu'il absorbe en partie le spectre visible et qu'il réfléchit en partie celui-ci.

Selon un premier mode de réalisation, le produit P en suspension ou en émission est un liquide composé essentiellement d'un mélange, d'une part, d'un ou plusieurs liquides organiques pris dans le groupe constitué par les phtalates d'un groupement monovalent alkyle tel que méthyle, éthyle, butyle, iso-octyle ou par l'huile de ricin; d'autre part, d'un ou plusieurs liquides tensio-actifs pris de préférence, parmi les sulfonates aromatiques ou les sels alcalins ou d'ammonium de ceux-ci. Les agents tensio-actifs facilitent les contacts entre les liquides organiques huileux et l'eau et améliorent la dispersion dans l'eau des liquides en suspension Les proportions respectives du liquide en suspension sont par exemple de 50 à 60% de produit organique et de 40 à 50% d'agent tensio-actif. Ce mélange liquide peut être avantageusement additionné d'un agent bactéricide et/ou algicide dans le but d'éviter la prolifération de micro-organismes. La proportion de ces additifs doit rester faible, de l'ordre de 5 à 10% afin de ne pas modifier les propriétés optiques de la suspension.

Selon un deuxième mode de réalisation, le produit P en suspension dans l'eau est un produit minéral solide à l'état finement divisé, par exemple un oxyde de zinc ou de titane ou un sel métallique tel que le nitrate basique de bismuth qui peut être mélangé à un liquide tensio-actif. Ces produits solides, de couleur blanche, présentent l'avantage de réfléchir en partie la lumière visible et de l'absorber en partie. Ils sont utilisés avantageusement dans les pays très ensoleillés, par exemple sous les climats méditerranéens.

On peut ajouter également à l'eau une proportion comprise entre 0,1% et 0,5% du poids total d'un gel appartenant à la famille des éthers cellulosiques afin de faire varier la viscosité et donc également la vitesse de sédimentation des particules en suspension. Dans les deux cas, que le produit P soit liquide ou solide, il suffit d'une faible proportion de produit en suspension, de l'ordre de 3% pour que le coefficient d'absorption soit de 99% uniformément sur toute la largeur du spectre visible. En faisant varier cette proportion entre 0,1% et 3%, grâce à la sédimentation contrôlée, on fait varier l'opacité de l'ombrage depuis un ombrage entièrement transparent aux radiations visibles jusqu'à un ombrage complètement opaque à ces radiations.

Les figures 2 à 6 représentent un mode de réalisation préférentiel des panneaux de capteurs 4. On voit sur la figure 2 une partie de la toiture transparente 2, par exemple une toiture en verre out en matière plastique soutenue par des éléments de charpente 2a. Les panneaux 4 sont plaqués sous la charpente, de sorte qu'ils délimitent avec la couverture 2, un espace intermédiaire 5.

La figure 4 représente un panneau élémentaire autoporteur, désigné dans son ensemble par le repère 20. Ce panneau a, de préférence, une largeur de 0,60 m, qui correspond à la largeur courante des châssis vitrés d'une toiture de serre. Chaque panneau 20 est composé d'une plaque alvéolaire 21, comportant des canaux parallèles 22, qui sont disposés selon la ligne de plus grande pente comme le montre la figure 5. Les plaques 21 sont en un matériau transparent. On utilise, de préférence, des plaques en matière plastique obtenues par extrusion, injection, soudure ou collage. L'épaisseur des plaques 21 est de l'ordre de quelques millimètres afin que l'inertie thermique et le poids des captreurs 4 soient très faibles. Dans l'exemple représenté, les plaques 21 sont planes mais elles peuvent également être cintrées si la couverture 2 est courbe. Le matériau qui compose les panneaux 20 doit avoir des propriétés qui répondent le mieux possible aux conditions suivantes. Il doit être transparent aux U.V. proches du visible et au spectre visible avec un facteur de transmission énergétique et optique supérieur à 80%. Il doit avoir une bonne résistance mécanique en chaleur humide supérieure à 90°C. Il doit être résistant, peu fragile, léger et flexible. Il ne doit pas perdre ses propriétés mécaniques et optiques en vieillissant. De préférence, on utilise des résines polymérisables de la famille des polycarbonateé, qui répondent bien aux critères ci-dessus. On peut également utiliser des polyméthacrylates de méthyle qui sont cependant plus onéreux.

Chaque panneau élémentaire 20 comporte, en outre, le long de ses petits côtés, un collecteur 23a, 23b, de section rectangulaire ou carrée, qui comporte un raccord cannelé respectivement 24a et 24b, lesquels raccords sont disposés en diagonale. Sur chaque raccord est connecté un flexible 25a et 25b qui relie le panneau respectivement au collecteur aller 6a et au collecteur retour 7. Les collecteurs 23a et 23b sont fabriqués dans le même matériau que les plaques 21. Ils comportent chacun le long de leur bord supérieur, une ouverture longitudinale, respectivement 26a et 26b, ayant une largeur légèrement supérieure à l'épaisseur des plaques 21. Chaque ouverture 26a et 26b est disposée entre deux plaques nervurées 27 et les petits côtés de la plaque 21 sont engagés entre les deux plaques 27 et collés et/ou soudés à celles-ci. L'ensemble de chaque collecteur 23a ou 23b et des plaques nervurées 27 est fabriqué d'une seule pièce, par exemple par extrusion. Ainsi, on peut obtenir des panneaux élémentaires ayant n'importe quelle largeur ou longueur en assemblant des plaques 21 et des collecteurs 23 qui sont découpés à la longueur voulue dans des éléments de grande longueur fabriqués en série.

La figure 2 montre le montage des capteurs élémentaires sous la toiture. Le collecteur inférieur 23a est posé sur un support fixe 28, en tôle pliée, qui ferme l'espace intermédiaire 5. Le collecteur supérieur 23b est posé sur un support en tôle pliée 29 à l'intérieur duquel il peut coulisser pour permettre la dilatation du panneau.

La figure 3 représente la jonction entre deux panneaux élémentaires 20a et 20b. Ceux-ci sont reliés, le long de leurs grands côtés, par des joints 30, à double lèvre, qui sont suspendus à la charpente par des suspentes 31. Il faut éviter que la température à l'intérieur de la serre ne dépasse un seuil maximum et un seuil minimum. Les conditions optimales de température, de luminosité et d'humidité sont bien connues pour chaque espèce et pour chaque stade de développement d'une même espèce.

Une serre climatisée selon l'invention permet de contrôler très efficacement les deux facteurs luminosité et température pour créer un climat optimum à l'intérieur de la serre.

Le fonctionnement est le suivant. Pendant les heures d'ensoleillement, on fait circuler le liquide 19 dans le circuit primaire 8, 9, 13, 11a, 11b, 6a, 6b, 4, 7. Le liquide 19 qui circule dans les capteurs 4 forme un filtre sélectif qui absorbe les I.R., qui laisse passer les U.V. proches du visible et qui absorbe et transmet une fraction de l'énergie des radiations visibles, avec un coefficient de transmission qui varie avec la concentration de la suspension en produit P. Les panneaux 4 font fonction de capteurs d'énergie solaire et l'énergie captée est transférée dans l'échangeur 12 à un circuit secondaire 32 qui comporte des réservoirs de stockage de calories. De préférence, on utilise plusieurs réservoirs 33a, 33b, 33c montés en cascade, de sorte qu'il se produit une stratification du liquide caloporteur circulant dans le circuit 32, qui est par exemple de l'eau. Le réservoir 33a contient l'eau la plus chaude tandis que le réservoir 33c contient l'eau la plus froide. L'eau est reprise au fond du réservoir 33c par une pompe de circulation 34 et renvoyée vers l'échangeur 12.

La serre 1 comporte une installation de chauffage 35 de tout type connu, par exemple un appareil de production d'air chaud qui est soufflé dans la serre par des aérothermes 36 ou toute autre installation de chauffage à basse température connue. L'eau chaude stockée dans les réservoirs 33a, 33b, 33c est utilisée pour alimenter l'installation de chauffage 35. Pendant la nuit ou les périodes froides, la circulation du liquide dans les panneaux 4 est interrompue et ceux-ci ne font pas fonction de radiateur. Par contre, ils servent d'écran thermique en association avec l'espace libre 5 et les coefficients de déperdition calorifique de la couverture sont réduits de moitié, ce qui permet d'économiser de l'énergie. Les panneaux 4 font également fonction pendant les heures d'ensoleillement, d'ombrage à opacité modulable, de telle sorte qu'il est possible de contrôler l'intensité lumineuse dans le spectre visible à l'intérieur de la serre malgré les variations de luminosité externe. On contrôle la concentration de la suspension grâce au réservoir de sédimentation 9, aux électrovannes 15b, 15d, 15f et aux pompes de circulation 10a, 10b, 10c.

La figure 1 représente schématiquement un coffret de régulation 37 qui est par exemple une régulation électronique. Sur ce coffret sont connectés un capteur de température extérieure 38, un capteur photo-électrique de flux lumineux 39, un capteur de température 40 et un capteur de flux lumineux 41 placés à l'intérieur de la serre, un thermostat 42 destiné à l'affichage et à la comparaison des températures au niveau de la culture, un capteur 43 de mesure de la température du sol ainsi que des sondes de température 44, 45 qui mesurent la température aux points le plus chaud et le plus froid du stockage 33.

Le coffret de régulation 37 pilote automatiquement les pompes 10a, 10b et 10c ainsi que les électrovannes 15b, 15d et 15f et agit sur le débit de liquide 19 dans le circuit primaire, ce qui fait varier la concentration de la suspension. Lorsque toutes les pompes sont en circulation et que toutes les électrovannes sont ouvertes, le débit est maximum, il ne se produit aucune sédimentation de produit P dans la cuve 9, la concentration de la suspension est maxima et le coefficient d'absorption du spectre visible est maximum. Les capteurs 4 constituent des ombrages opaques dans le spectre visible. Lorsqu'une ou deux pompes 10 sont arrêtées et qu'une ou deux électrovannes 15 sont fermées, le debit du liquide 19 diminue. Il se produit une sédimentation du produit P dans le fond du réservoir 9, dans les mamelles 13 qui ne sont plus en service. La concentration de la suspension diminue et le coefficient d'absorption du spectre visible également. La régulation peut se faire, pour la température, soit par comparaison différentielle de la température extérieure mesurée par la sonde 38 avec la température interne mesurée par la sonde 40, soit par comparaison différentielle des température du fluide 19 à l'entrée et à la sortie des absorbeurs, soit par comparaison différentielle des températures au niveau de la plante et des fluides primaire et secondaire, soit par combinaison de ces diverses régulations.

Pour l'intensité de la luminosité, la régulation peut être obtenue par comparaison de l'intensité du flux lumineux mesuré dans l'enceinte par la sonde 41, à un seuil affiché. Grâce à cette régulation qui prend en compte en cascade les températures et les intensités lumineuses, on maitrise les températures et la luminosité dans l'enceinte. L'évaporation des plantes et du sol sont réduits et l'arrosage ainsi que la ventilation, qui peuvent être asservis à l'automatisme, en sont très sensiblement diminués.

Une serre climatisée selon l'invention associée à un dispositif de régulation 37, permet de mesurer et d'analyser de façon permanente, les paramètres climatiques suivants: températures, hydrométrie, luminosité et vitesse du vent, de comparer ces variables à des valeurs de consigne requises et de maitriser à l'intérieur de l'enceinte, la luminosité visible, la température du sol, la température ambiante et le degré hydrométrique. On peut ainsi contrôler le rythme végétatif des plantes et planifier le rythme de production tout en diminuant la consommation d'eau et d'énergie.

Les abris climatisé selon l'invention, comportant des capteurs solaires qui forment des écrans d'opacité contrôlables peuvent être utilisés non seulement pour cultiver des plantes, mais également comme locaux de maturation ou de conservation de fruits ou légumes ou comme locaux d'élevage d'animaux ou de poissons.

Il est possible de faire fonctionner en même temps les capteurs 4 pour refroidir l'atmosphère à l'intérieur de la serre et l'installation de chauffage 35 pour réchauffer le sol ou le voisinage du sol, ce qui n'est évidemment pas possible dans les installations où les panneaux 4 font alternativement fonction de capteurs et de radiateurs.

## Revendications

1. Procédé pour climatiser des serres revêtues d'une couverture transparente comportant des capteurs transparents dans lesquels on fait circuler un fluide qui absorbe une partie de l'énergie solaire, caractérisé en ce que ledit fluide est un mélange d'eau d'un produit qui transmet à l'intérieur de la serre une fraction de l'énergie solaire sensiblement constante sur toute la largeur du spectre visible et on fait varier la concentration dudit produit et donc l'opacité de la couverture en fonction des variations de la luminosité solaire, de sorte que l'on contrôle la luminosité et la température à l'intérieur de la serre.

2. Procédé selon la revendication 1, caractérisé en ce que, pendant les périodes d'ensoleillement, on fait circuler en circuit fermé dans un réservoir de sédimentation et dans lesdits capteurs transparents qui sont disposés sous la couverture transparente de la serre, une suspension dans de l'eau d'un produit plus lourd que l'eau qui laisse passer une fraction de l'énergie solaire sensiblement constante sur toute la largeur du spectre visible et on fait varier la quantité dudit produit qui sédimente dans le fond du réservoir en fonction des variations de luminosité, de telle sorte que l'on module la proportion du produit en suspension et la fraction de l'énergie solaire qui est transmise à l'intérieur de la serre sur toute la largeur du spectre visible.

3. Procédé selon la revendication 2, caractérisé en ce que ledit produit en suspension dans l'eau est un mélange composé d'un ou plusieurs liquides organiques pris dans le groupe constitué par les alkyl-phtalates et l'huile de ricin et d'un ou plusieurs liquides tensio-actifs, de préférence des sulfonates aromatiques ou les sels alcalins ou d'ammonium de ceux-ci.

4. Procédé selon la revendication 2, caractérisé en ce que ledit produit en suspension dans l'eau est un produit solide finement divisé, pris de préférence dans le groupe constitué par l'oxyde de zinc, l'oxyde de titane et le nitrate basique de bismuth.

5. Procédé selon la revendication 3, caractérisé en ce que l'on additionne à l'eau un liquide tensio-actif et une proportion comprise entre 0,1% et 0,5% du poids d'eau d'un gel appartenant à la famille des éthers cellulosiques.

6. Dispositif pour la mise en oeuvre du procédé selon la revendication 1 et l'une des revendications 2 à 5, comportant des capteurs solaires (4) en un matériau transparent qui sont placés sous ladite couverture transparente et qui sont incorporés dans un circuit fermé, dans lequel circule un liquide caloporteur (19) qui absorbe sélectivement l'énergie solaire, caractérisé en ce que ledit liquide caloporteur est une suspension dans l'eau d'un produit plus lourd que l'eau, qui laisse passer une fraction de l'énergie solaire sensiblement constante sur toute la largeur du spectre visible et que ledit circuit fermé comporte des moyens permettant de faire varier la concentration de la suspension en fonction des variations de la luminosité externe, de telle sorte que lesdits capteurs constituent un ombrage artificiel ayant une opacité contrôlée.

7. Dispositif selon la revendication 6, caractérisé en ce que ledit circuit fermé comporte un réservoir de sédimentation (9) équipé de plusieurs sorties (13a, 13b, 13c, 13d, 13e, 13f) disposées à la partie inférieure dudit réservoir et des moyens 15b, 15d, 15f) pour fermer et pour ouvrir automatiquement lesdites sorties en fonction de l'intensité du flux lumineux, de telle sorte que la concentration et le pouvoir absorbant de la suspension qui circule dans les capteurs varient.

8. Dispositif selon la revendication 7, caractérisé en ce que ledit réservoir de sédimentation (9) est un réservoir cylindrique horizontal équipé de sorties, en forme de mamelles convergentes (13a, 13b, 13c, 13d, 13e, 13f), qui sont réparties le long de la génératrice inférieure dudit réservoir.

9. Dispositif selon l'une quelconque des revendications 7 et 8, caractérisé en ce que chacune desdites sorties est équipée d'un moyen de contrôle de circulation (10a, 10b, 10c, 15b, 15d, 15f), lesquels moyens commandés automatiquement par un dispositif de régulation automatique (37) sur lequel sont connectés des capteurs de température (38, 40) et des capteurs de flux lumineux (39, 41) situés à l'extérieur et à l'intérieur de la serre.

10. Dispositif selon l'une quelconque des revendications 7 à 9, caractérisé en ce que ledit réservoir de sédimentation est en même temps un échangeur tubulaire à flux croisés, dans lequel ladite suspension (19) circule de haut en bas à l'extérieur des tubes et un liquide caloporteur secondaire circule dans les tubes échangeurs (12).

11. Dispositif selon la revendication 10, caractérisé en ce que ledit liquide caloporteur secondaire circule dans un circuit fermé secondaire qui comporte un réservoir d'accumulation de calories avec stratification ou plusieurs réservoirs (33a, 33b, 33c) montés en cascade, le fond de chaque réservoir étant connecté au sommet de celui qui le suit et le fond du réservoir le plus froid est connecté à l'entrée dudit échangeur.

12. Dispositif selon la revendication 10, caractérisé en ce que ladite serre comporte une installation de chauffage (35, 36) indépendante des capteurs, qui est alimentée par l'eau chaude stockée dans lesdits réservoirs d'accummulation.

13. Dispositif selon l'une quelconque des revendications 6 à 12, caractérisé en ce que lesdits capteurs sont constitués de capteurs élémentaires juxtaposés, et chaque capteur élémentaire comporte une plaque alvéolaire (20a, 20b), en matière plastique transparente, de préférence en polycarbonate, ayant une épaisseur de quelques millimètres, qui est appuyée contre la face inférieure de la charpente (2a) et deux collecteurs (23a, 23b) de section rectangulaire, composés de même matériau, comportant chacun une ouverture longitudinale (26a, 26b) dans laquelle les côtés de la plaque perpendiculaires aux canaux sont engagés.

**Claims**

1. Method for air-conditioning hot-houses covered with a transparent roof comprising transparent collectors inside which a fluid is caused to flow, which fluids absorb part of the solar energy, wherein the said fluid is a mixture of water with a substance which transmits to the inside of the hot-house a substantially constant fraction of the solar energy over the whole width of the visible spectrum, and the concentration of said substance is caused to vary, and with it the opacity of the roof, in relation to the sun luminosity, so as to control the luminosity and the temperature inside the hot-house.

2. Method as claimed in claim 1, wherein, during the sunny spells, a suspension in water of a substance heavier than water is caused to flow in closed circuit through a sedimentation reservoir and into the said transparent collectors placed under the transparent roof of the hot-house, said substance allowing a substantially constant fraction of solar energy to filtrate through over the whole width of the visible spectrum, and wherein the said product which settles at the bottom of the reservoir is caused to vary in relation to the luminosity variations, so as to modulate the proportion of the substance in suspension and the fraction of solar energy which is transmitted inside the hot-house over the whole width of the visible spectrum.

3. Method as claimed in claim 2, wherein the said substance in suspension in water is a mixture composed of one or more organic liquids selected from the group constituted by alkylphtalates and caster oil and one or more surface-active liquids, preferably aromatic sulfonates or the alkaline or ammonium salts thereof.

4. Method as claimed in claim 2, wherein the said substance in suspension in the water is a finely divided solid selected preferably from the group constituted by zinc oxide, titanium oxide and bismuth basic nitrate.

5. Method as claimed in claim 3, wherein a surface-active liquid is added to the water as well as a quantity varying between 0.1% and 0.5% of the weight of the water of a gel belonging to the family of cellulosic ethers.

6. Device for reducing to practice the method as claimed in claim 1 or in any one of claims 2 to 5, comprising solar collectors (4) made of a transparent material which are placed under the said transparent roof and which are incorporated into a closed circuit, inside which flows a heat-carrying liquid (19) absorbing selectively the solar energy, wherein the said heat-carrying liquid is a suspension in water of a substance heavier than water, which substance allows a substantially constant fraction of the solar energy to filtrate through over the whole width of the visible spectrum and wherein the said closed circuit comprises means for varying the concentration of the suspension in relation to the variations of the outside luminosity, so that the said collectors constitute an artificial shade with controlled opacity.

7. Device as claimed in claim 6, wherein the said closed circuit comprises a sedimentation reservoir (9) equipped with a plurality of outlets (13a, 13b, 13c, 13d, 13e, 13f) situated at the lower part of the said reservoir and means (15b, 15d, 15f) for automatically closing and opening the said outlets as a function of the light flux so that the concentration and absorbing power of the suspension flowing in the collectors can vary.

8. Device as claimed in claim 7, wherein the said sedimentation reservoir (9) is a horizontal cylinder-shaped reservoir equipped with outlets, shaped as convergent nipples (13a, 13b, 13c, 13d, 13e, 13f), distributed along the lower generatrix of the said reservoir.

9. Device as claimed in any one of claims 7 and 8, wherein each one of the said outlets is provided with flow-controlling means (10a, 10b, 10c, 15b, 15d, 15f), which means are automatically controlled by an automatic regulation device (37) on which are connected temperature sensors (38,40) and light flux pickup means (39, 41) situated outside and inside the hot-house.

10. Device as claimed in any one of claims 7 to 9, wherein the said sedimentation reservoir is also a crossed flux tubular exchanger, in which the said suspension (19) flows downwardly outside the tubes and a secondary heat-carrying liquid flows inside the exchanger tubes (12).

11. Device as claimed in claim 10, wherein the said secondary heat-carrying liquid flows inside a secondary closed circuit which comprises a heat-storing reservoir with stratification or several cascade-mounted reservoirs (33a, 33b, 33c) the bottom of each reservoir being connected to the top of the following one, and the bottom of the coolest reservoir being connected to the inlet of the said exchanger.

12. Device as claimed in claim 10, wherein the said hot-house comprises a heating installation (35, 36) independent of the collectors, which is supplied with hot water stored in the said storage reservoirs.

13. Device as claimed in any one of claims 6 to 12, wherein the said collectors are constituted by juxtaposed elementary collectors, and each elementary collector comprises a honeycomb plate (20a, 20b), made of transparent plastic material, preferably polycarbonate, a few millimetres thick, which is in resting contact on the lower face of the framework (2a) and two collectors (23a, 23b) of rectangular cross-section, made of the same material, each one comprising a longitudinal opening (26a, 26b) inside which the sides of the plate which are perpendicular to the channels are engaged.

## Patentansprüche

1. Verfahren zum Klimatisieren von Gewächshäusern, die mit einer transparenten Abdeckung überzogen sind, die transparente Kollektoren aufweist, in welche man eine Flüssigkeit strömen lässt, die einen Teil der Sonnenenergie auffängt, dadurch gekennzeichnet, dass die genannte Flüssigkeit eine Mischung aus Wasser und einer Substanz ist, welche in das Gewächshausinnere einen im wesentlichen konstanten Bruchteil der Sonnenenergie auf die gesamte Breite des sichtbaren Spektrum überträgt, und dass man die Konzentration der genannten Substanz und damit die Opazität der Abdeckung je nach den Schwankungen der Sonnenlichtstärke verändert, so dass man die Lichtstärke und die Temperatur im Inneren des Gewächshauses kontrolliert.

2. Verfahren nach Anspruch 1, dadurch gekennzeichnet, dass man während der Perioden der Sonnenbestrahlung in geschlossenem Kreislauf in einem Sedimentationsreservoir und in den genannten transparenten Kollektoren, die unter der transparenten Abdeckung des Gewächshauses angeordnet sind, eine Suspension in Wasser, und zwar von einer Substanz, die schwerer ist als Wasser, in Umlauf bringt, welche einen im wesentlichen konstanten Bruchteil der Sonnenenergie auf die gesamte Breite des sichtbaren Spektrums durchdringen lässt, und dass man die Menge der genannten Substanz, die auf dem Boden des Reservoirs sedimentiert, je nach den Lichtstärkeschwankungen verändert, so dass man die Proportion der in Suspension befindlichen Substanz und den Bruchteil der Sonnenenergie moduliert, welcher über die gesamte Breite des sichtbaren Spektrums in das Innere des Gewächshauses übertragen wird.

3. Verfahren nach Anspruch 2, dadurch gekennzeichnet, dass die im Wasser in Suspension befindliche Substanz eine Mischung ist, die aus einer oder mehrerer organischer Flüssigkeiten, welche aus der aus Alkylphthalaten und Rizinusöl bestehenden Gruppe entnommen sind und aus einer oder mehrerer oberflächenaktiver Flüssigkeiten, vorzugshalber aromatischer Sulfonate oder der Alkalisalze oder deren Ammonium besteht.

4. Verfahren nach Anspruch 2, dadurch gekennzeichnet, dass die genannte im Wasser in Suspension befindliche Substanz eine feste, fein verteilte Substanz ist, die vorzugshalber aus der aus Zinkoxyd, Titanoxyd oder basischem Bismutnitrat bestehenden Gruppe entnommen ist.

5. Verfahren nach Anspruch 3, dadurch gekennzeichnet, dass man dem Wasser eine oberflächenaktive Flüssigkeit und einen Gelgehalt von 0,1% bis 0,5% des Wassergewichts zusetzt, und zwar von einem zur Familie der Zellstoffäther gehörenden Gel.

6. Vorrichtung zum Durchführen des Verfahrens nach Anspruch 1 und einem der Ansprüche 2 bis 5, die Sonnenkollektoren (4) aus einem transparenten Material aufweist, welche unter der genannten transparenten Abdeckung liegen und in einen geschlossenen Kreislauf eingegliedert sind, durch den eine wärmetragende, die Sonnenenergie wahlweise auffangende Flüssigkeit (19) fliesst, dadurch gekennzeichnet, dass die genannte wärmetragende Flüssigkeit eine Suspension in Wasser ist, und zwar von einer Substanz, die schwerer als Wasser ist, welche einen im wesentlichen konstanten Bruchteil der Sonnenenergie auf die gesamte Breite des sichtbaren Spektrums durchdringen lässt, und dass der genannte geschlossene Kreislauf Mittel aufweist, die es ermöglichen, die Konzentration der Suspension je nach den Schwankungen der äusseren Lichtstärke zu verändern, so dass die genannten Kollektoren einen künstlichen Schatten mit einer kontrollierten Opazität darstellen.

7. Vorrichtung nach Anspruch 6, dadurch gekennzeichnet, dass der genannte geschlossene Kreislauf aus einem mit mehreren, an der Unterseite des genannten Reservoirs angebrachten Ausgängen (13a, 13b, 13c, 13d, 13e, 13f) ausgerüstetem Sedimentations-Reservoir (9) besteht und aus Mitteln (15b, 15d, 15f) zum automatischen Verschliessen und Öffnen der genannten Ausgänge, und zwar je nach Lichtstromhelligkeit, so dass die Konzentration und die Absorbierungskraft der in den Kollektoren fliessenden Suspension sich verändern.

8. Vorrichtung nach Anspruch 7, dadurch gekennzeichnet, dass das genannte Sedimentations-Reservoir (9) ein horizontales, zylindrisches mit Ausgängen ausgerüstetes Reservoir ist, wobei die Ausgänge eine Form von an der unteren Generatrix des genannten Reservoirs entlang verteilten, konvergierenden Mamellen aufweisen.

9. Vorrichtung nach einem der Ansprüche 7 oder 8, dadurch gekennzeichnet, dass jeder der genannten Ausgänge mit einem Durchflusskontrollmittel (10a, 10b, 10c, 15b, 15d, 15f) ausgerüstet ist, wobei diese Mittel automatisch durch einen automatischen Regler (37) gesteuert werden, auf welchem Temperaturgeber (38, 40) und an der Aussen- und Innenseite des Gewächshauses gelagerte Lichtstromaufnehmer (39, 41) angeschlossen sind.

10. Vorrichtung nach einem der Ansprüche 7 bis 9, dadurch gekennzeichnet, dass das genannte Sedimentations-Reservoir gleichzeitig ein rohrförmiger Kreuzstromaustauscher ist, in welchem die genannte Suspension (19) ausserhalb der Rohre von oben nach unten fliesst und eine sekundäre, wärmetragende Flüssigkeit in den Austauscherrohren (12) fliesst.

11. Vorrichtung nach Anspruch 10, dadurch gekennzeichnet, dass die genannte sekundäre wärmetragende Flüssigkeit in einem sekundären geschlossenen Kreislauf fliesst, der ein kalorienspeicherndes Reservoir mit Schichtbildung aufweist, oder mehrere kaskadenförmig angebrachte Reservoirs (33a, 33b, 33c), wobei der Boden eines jeden Reservoirs mit dem Oberteil des folgendes Reservoirs, und das kälteste Reservoir mit dem Zugang des genannten Austauschers verbunden ist.

12. Vorrichtung nach Anspruch 10, dadurch gekennzeichnet, dass das genannte Gewächshaus eine von den Kollektoren unabhängige Heizungsanlage (35, 36) aufweist, welche durch das in den genannten Speicherreservoirs gelagerte warme Wasser gespeist wird.

13. Vorrichtung nach einem der Ansprüche 6 bis 12, dadurch gekennzeichnet, dass die genannten Kollektoren aus nebeneinanderliegenden Grundkollektoren bestehen, und dass jeder Grundkollektor eine zellenförmige Platte (20a, 20b) aus transparentem Kunststoff, vorzugshalber aus Polykarbonat aufweist, deren Dicke einige Millimeter beträgt und die an der Innenseite des Rahmengestells (2a) und an zwei Kollektoren (23a, 23b) mit rechteckigem Querschnitt abgestützt ist, die aus demselben Material bestehen und je eine Längsöffnung (26a, 26b) aufweisen, in welche die senkrecht zu den Kanälen liegenden Plattenseiten eingefügt sind.

Fig .1.

Fig. 2.

Fig. 3.

Fig.4.

Fig.5.

Fig.6.

Fig. 7.

0 003 944